# EUROPEAN PATENT APPLICATION

(11) **EP 0 984 615 A2**
(43) Date of publication of application: **08.03.2000**
(21) Application number: 99306886.5
(22) Date of filing: 31.08.1999
(51) Int. Cl.: H04N 1/32

(54) **Document management method and apparatus, and recording medium therefor**

(30) Priority: 31.08.1998 JP 24472198
(71) Applicant: HITACHI, LTD., Chiyoda-ku, Tokyo (JP)
(72) Inventor: Kawanishi, Yasunori, Kawasaki-shi, Kanagawa-ken (JP); Toyoshima, Hisashi, Hachiohji-shi, Tokyo (JP); Nagai, Yasuhiko, Tokyo (JP)
(74) Representative: Calderbank, Thomas Roger

(57) **Abstract**

The seal mark information that system manager 100 encoded with the cryptographic key that seal mark management equipment 101 manages according to a requirement of employee 110 is embedded in the mark of seal image design that employee 110 created and transmitted.

A public key being necessary for decoding is attached to a seal mark or distributed to outside system manager 100N associated with employee terminal 111 inside company in advance

Because the received side can be confirmed if it is embedded in a seal mark with a public key distributed in advance or a public key attached to a seal mark, document certification, an original and validity can be controlled, and can be confirmed on the network.

## Description

The present invention relates to a certification method and apparatus to certificate original of document and validity of document by an electronic seal, and a storage medium storing a document management program that realizes the method and the apparatus.

At present the data circulated on the network is increasing, it becomes important that the technique that can confirm the truth of data on the network. Following spread of groupware, while an approval person reproduces data which was approved and circulates data which was approved in a network. chances that a reading person during circulation is reproducing for an individual have increased.

And, following an increase of a commercial transaction on the network, the role of a receipt as for data becomes necessary to certify payment at the time of a settlement of account.
As for data, a means for being necessary to reproduce by a specified number and being impossible to be falsified, becomes necessary like carbon copy used with a conventional paper.
Confirmation of a halfway falsification of data is conducted by a digital signature in EC that uses an internet, In SET that is used to do a credit settlement of account safely, a card proprietor is being certified by a digital signature.
Digital signature is a cryptography which is encoded compressed sentences that are compressed information to be communicated with a sender's cryptograph key, and the digital signature can be decoded by a receiver's decoding or public key.
That is, a receiver can confirm that a message is not falsified by comparing compressed sentences from received message with decoded compression sentences from digital signature.

On the other hand, the general meaning of the seal and the signature covers both confirmation of an original and document certification. As an example of a technique that solves above problems, a method of preventing a falsification of documents also is developed by adding a seal or a signature to the documents and the deformation of the seal and signature in accordance with the characteristic value of the document is enable to certificate the document as shown in Japanese patent Laid-open No. 10-11509 (It is called prior art 1 thereafter)
And a method of confirming an original and a reproduction of present documents by using an ID card and a copy machine also is developed as shown in Japanese patent Laid-open print No. 6-176036 (It is called prior art 2 thereafter) .

A digital signature have both functions of certification of documents and validity of data, however a person who receives the digital signature can not confirm the justification or validity of information after having seen the received data.
In an actual world, a registered seal gives us relief feeling because it is visible, however a digital signature does not have such a visible characteristic.

On the other hand, while a conventional electronic seal system uses the seal image that is visible, the seal image itself was mere design, and when data with an electronic seal was reproduced, it was difficult to distinguish an original and a reproduction.
For example, it is necessary to take synchronism between an original and a reproduction, and to manage validity and an invalidity when original or reproduction has its value and approval to seal image is valuable such as a census registration card, or a register, etc
However, it was impossible to take synchronism between the original of data and a reproduction and to manage validity and an invalidity in the conventional electronic seal system.

That is, there was not a valid means when it is necessary to guarantee the genuineness and the original of data, and when the data is reproduced, and when limiting the number of reproduction data, and when a user optionally determine whether user reproduces or not.

And, in prior art 1, the seal image itself is also mere design data, and it is necessary to compare the seal image that is standardized on the server with the seal image that is formed by the feature quantity of documents for document certification.
That is to say, document certification by on-line in the specific intranet can be done, however receiver who receives data can not certificate documents by displayed data when transferring a data on a network between corporations such as an extranet etc
And, there was no electronic seal system with a function that the original and validity can be restricted and can be confirmed on the displayed data.
In prior art 2 providing a means of certifying an original and a reproduction of a hard copy in the copy machine, however the original and the validity of data could not be confirmed.

The purpose of the present invention is to provide an electronic seal reproduction management system that can guarantee the genuineness of data in the visible seal image that is, can confirm the genuineness of data and can control and confirm an original and validity.

To resolve above problems, in the present invention,
A document management apparatus comprising
At least one terminal,
At least mark management apparatus for managing a mark which has visually identified characteristic and self-certification? Means used in the terminal,
wherein said one terminal and said mark management apparatus are coupled with each other through a communication network,
wherein said mark management apparatus comprising
mark management data base which is necessary for an original and validity of data used in said terminal,
combining means embedding encrypted information to confirm an onginal and validity by encrypt key that is managed in said mark management apparatus into said mark in responsive to request from said terminal, attaching public key with said mark, distributing said public key to said terminal or said mark management apparatus,
said terminal comprising mark obtain means for obtaining said mark in which information to confirm an original and validity is embedded when sealing seal mark generated in said mark management apparatus, reproducing said seal mark, invalidating said seal mark,
means for generating a mark to confirm an original and validity of data and comprising document certification means, sealing said mark on said data by encrypting confirming information that generated data is not falsified by secret key set in said terminal, embedding said encrypted information into said mark, attaching public key,
means for confirming an original of data and validity of data and certifying said document using said mark.

In the drawings:

Figure 1 illustrates the outline structure of an electronic seal reproduction management system to which embodiment of the present invention is applied.

Figure 2 illustrates the hardware structure of the seal mark management equipment that is shown in Fig. 1.

Figure 3 illustrates the hardware structure of the employee terminal that is shown in Fig. 1.

Figure 4 shows the data example of seal mark management DB that is shown in Fig. 2.

Figure 5 shows the data example of seal mark sealing management DB that is shown in Fig. 2.

Figure 6 shows the data example of seal mark reproduction management DB that is shown in Fig. 2.

Figure 7 shows the example of image of a seal mark.

Figure 8 explains a function for embedding necessary information to seal for document confirmation of the data / reproduce / invalidate / confirm in seal mark on the employee terminal that is shown in Fig. 1, and initial screen image of the interface.

Figure 9 is an image figure to explain processing of a seal mark sealing system.

Figure 10 is a figure to explain processing of a seal mark sealing system.

Figure 11 is an image figure to explain processing of a seal mark reproduction system.

Figure 12 is a figure to explain processing of a seal mark reproduction system.

Figure 13 is an image figure to explain processing of a seal mark invalidity system.

Figure 14 is a figure to explain processing of a seal mark invalidity system.

Figure 15 is a figure to explain processing of a seal mark confirmation system.

Figure 16 is a figure to explain processing of a seal mark confirmation system.
As follows, an example of a present invention implementation form is explained by using a drawing.
The details of a present invention are explained here by using the example of the electronic seal reproduction management system in the network between a company intranet and network between companies.
And, the same number in the drawings that are explained in the followings represents the same parts and an element.
And that does not limit to the present invention.

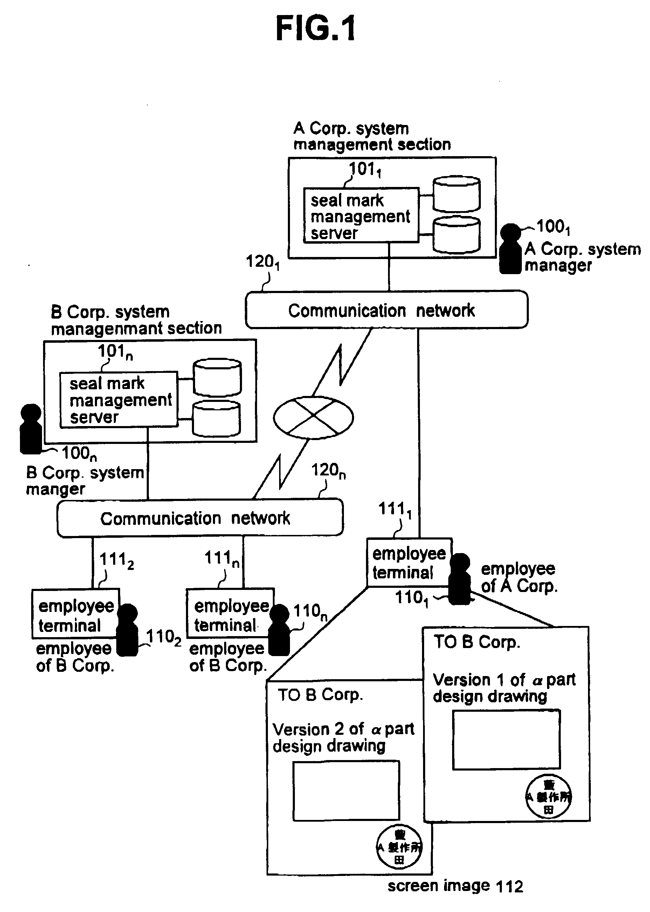

Fig. 1 illustrates the outline structure of the electronic seal reproduction management system of the present invention.
The electronic seal reproduction management system of the present embodiment is a system which a system manager who manages a seal mark 1 0 0 1 ∼ 1 0 0 n (we will call them system manager 100 thereafter), and an employee 1 1 0 1 ∼ 1 1 0 n (we will call them employee 110 thereafter) use, and as shown in Fig. 1, seal mark management equipment 1011 (we will call it seal mark management equipment 101 thereafter), and employee terminal 1111 are coupled with each other through communication network 1201 (we will call it communication network 120 thereafter)
The same system or the terminal such as other company are coupled with the electronic seal reproduction management system.
The seal mark here means visible image data, and it has functions to confirm an original or validity of data, certify whether data was falsified or not (We will call it document certification thereafter), and confirm whether it was reproduced or not, and the seal mark shows a mark which has shape of image design such as a seal, or signature image .

Seal mark management equipment 101 is a server which system manager 100 manages, the server controls and confirms of an original and validity, and certify document between the company intranet and network transactions among companies.
Seal mark management equipment 101 creates a seal mark in according to a requirement of employee 110, the seal mark being embedded information being necessary to confirm original, and register seal mark to seal mark management DB209 and seal mark sealing management DB 210 and seal reproduction management DB211 as we will mention later.

Employee terminal 111 is the terminal that employee 110 uses.
Employee 110 creates documents, etc. that are necessary for a business using employee terminal 111, and employee 110 exchanges data with system manager 100.
The seal mark of every individual is managed on employee terminal 111, etc.. When changing information such as belonging etc, system manager 100 renews a seal mark, and sends renewed seal mark to employee terminal 111. Screen image 112 is an example of screen image when the data with a seal mark is indicated, and it shows a figure in which data, that is a part design drawing of the first edition and the second edition, is created.

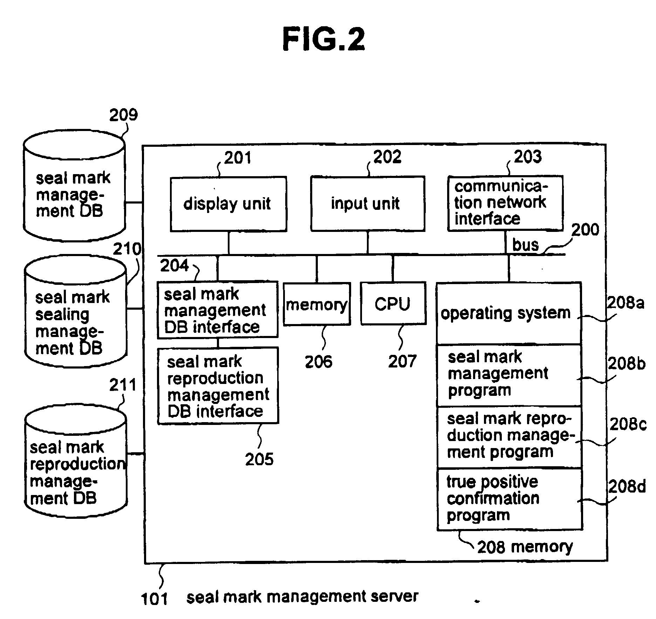

Fig. 2 illustrates the hardware structure of seal mark management equipment 101.
The hardware structure of the seal mark management equipment 101 of the present embodiment includes display unit 201, input unit 202, communication network interface 203, seal mark management DB interface 204, seal mark log management DB interface 205, memory unit 206, CPU 207, and temporary memory unit 208, are coupled between them through bus 200 as shown in Fig.2.
And, as an external storage, seal mark management DB209 and seal mark reproduction management DB210 are coupled to the seal mark management equipment 101.

Display unit 201 is used to display a message, etc. for a system manager 100 using seal mark management equipment 101, and display unit 201 comprises CRT, and a liquid crystal display, etc..

Input unit 202 is used so that system manager 100 using seal mark management equipment 101 inputs data, and an instruction, etc., and input unit 202 comprises a keyboard, and a mouse, etc.

Communication network interface 203 is an interface to exchange data with employee terminal 111 and the seal mark management equipment 101N etc. of other company through communication network 120.

The seal mark management DB interface 204 is an interface to exchange data with the seal mark sealing management DB 209.

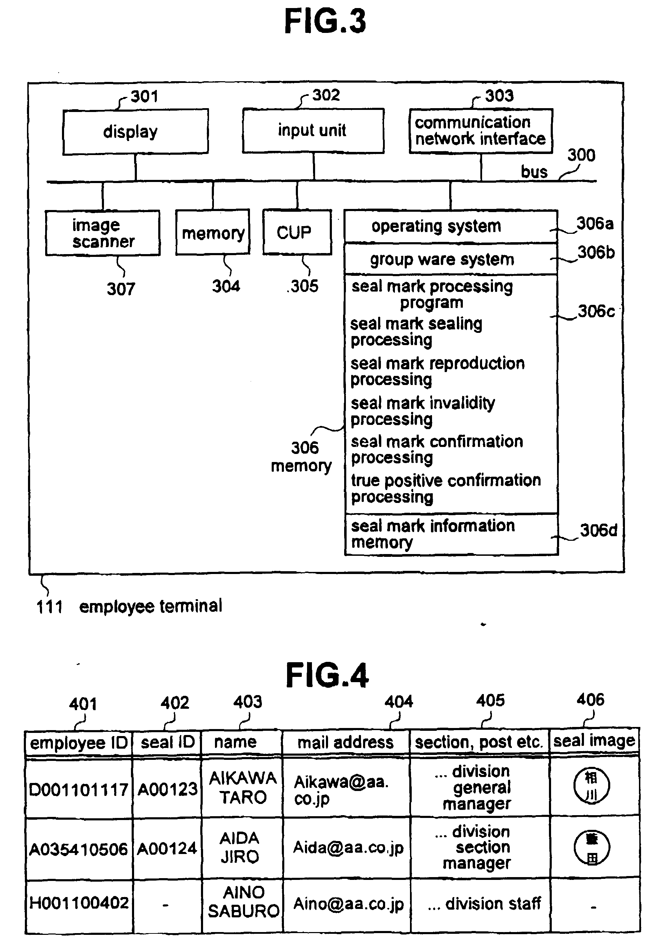

The seal mark sealing management DB 209 manages by associating data such as an employee ID, seal ID, and a seal image, etc.
An example of the seal mark management DB 209 is shown in Fig. 4.

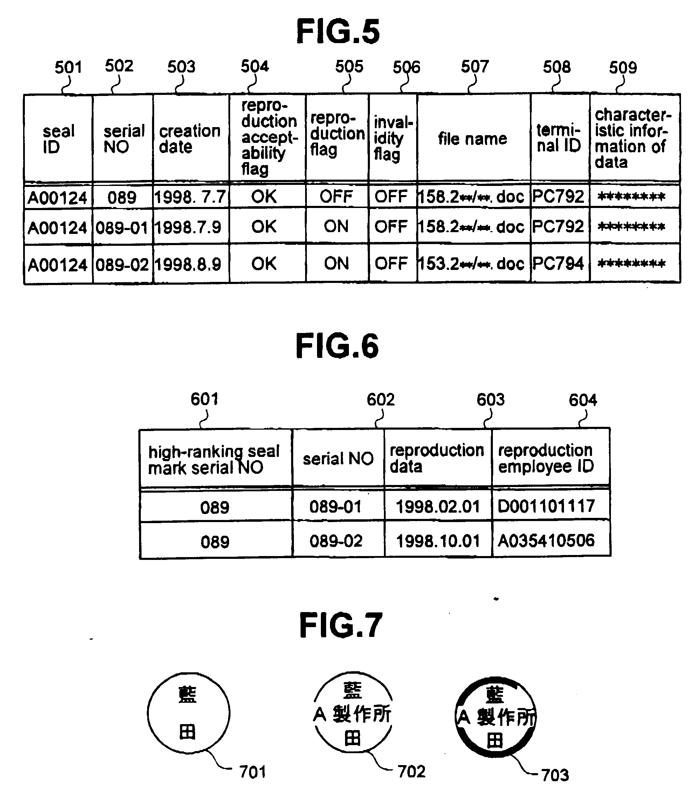

And, when sealing data, the seal mark management program exchange data with a seal sealing DB210.
The seal mark sealing management DB 210 manages by associating data such as an seal ID, Serial No., creation date, reproduction acceptability flag, reproduction flag, invalidity flag, file name, terminal ID, and data characteristic.
An example of the seal mark sealing management DB 210 is shown in Fig. 5,

The seal mark reproduction management interface 205 is an interface to exchange data with the seal mark reproduction management DB211. The seal mark reproduction management DB211 manages by associating data used when reproducing seal mark in an employee terminal 111N,the data is like a high-ranking seal total NO, Serial NO, the reproduction date, or reproduction employee ID.
An example of the seal mark reproduction management DB211 is shown in Fig. 6.
The memory unit 206 is used to permanently memorize the program and the data that are used with seal mark management equipment 101,etc.
The memory unit 206 comprises a hard disk, and a floppy disk, etc.

CPU 207 controls each part that is included in the seal mark management equipment 101, and CPU 207 executes various operation processing.

Operating system 208A (We will call it OS208A thereafter), seal mark management program 208B, and seal mark reproduction management program 208C which are necessary for CPU to execute above operation are stored temporary in memory 208.
These programs are stored in a storage medium such as an CD-ROM and it is provided.
The programs are stored in a hard disk at the time of installing this system, and they are stored to memory 208 at the time of starting an information processing machine.

OS208A is a program to realize a function such as a file management, process management or device management to control the seal mark management equipment 101 as a whole.

True positive confirmation program 208D realizes the seal mark management program 208B and seal mark reproduction management program 208C on condition of a method of confirming whether a seal mark is true or not as shown in patent application No. 9-348860, and the method of confirming whether data on which seal mark is sealed is true or not.
The seal mark management program 208B executes a processing of referring seal mark management DB 209, a processing of registering / renewing seal mark sealing management DB 210, a processing of specific information in a seal mark, and a processing of sending a seal mark to the terminal which requests the seal mark in case of receiving sealing request from employee terminal 111.

In the case of data already registered in the seal mark management DB, a system manager 100 instructs a processing of registering / renewing data in seal mark management DB 209, however an employee 110 also can instruct it.

The technique in which specific information is embedded in the image data is known as an digital watermark.
The technique of a digital watermark is stated at 100 - 107 pages in Nikkei Electronics Vol 683, 1997.
There is a invisible digital watermark so that human eyes can detect information embedded, and there is another visible digital watermark so that human eyes can detect information, and it is said that there is a limit in the information quantity that is embedded in case of the invisible digital watermark.
In the case of seal mark, there is no trouble happening although the design of the seal mark is slightly changed as far as the symbolic meaning that the seal image indicates is not changed, that is, as far as we can understand what the mark indicates.
Therefore combined a visible digital watermark and an invisible digital watermark as shown in Fig. 7 can let to some extent many information be embedded.

And, the seal mark management program executes a process of renewing the seal mark sealing management DB 210, and the seal mark reproduction management DB 211 in case there is a seal mark invalidity processing requirement from employee terminal 111.
The seal mark reproduction management program registers / renews the seal mark sealing management DB 210, and seal mark reproduction management DB 211 in case that there is a seal mark reproduction requirement from employee terminal 111.

And the seal mark reproduction management program executes a process of referring to the seal mark sealing management DB210 and seal mark reproduction DB 211 in case there is a document information confirmation requirement from the employee terminal 111.

Fig. 3 is a diagram showing hardware structure of employee terminal 111.

The hardware structure of employee terminal 111 of the present embodiment as shown in Fig. 3, comprises that a display unit 301, input unit 302, communication network interface 303, memory unit 304, central processing unit (CPU) 305 and temporary memory 306 are coupled to each other by bus 300.
And in case the design of a seal used in the conventional actual world as seal image design is used, image scanner 307 is connected to the employee terminal 111, and design which a user wishes to use can be read and can be edited in the bit map, etc..
The display unit 301 is used to display a message, etc. for an employee 110 who uses employee terminal 111, and the display unit 301 comprises a CRT, and a liquid crystal display, etc..

Input unit 302 is used so that an employee 110 who uses employee terminal 111 can input data, or an instruction, etc., and the input unit 301 comprises a keyboard, and the mouse, etc..

Communication network interface 303 is an interface to exchange data with seal mark management equipment 101, and an employee terminal 111N so on through communication network 120.

Memory 304 is used to permanently memorize the program and the data that are used on employee terminal 111, etc., and the memory 304 comprises a hard disk, and a floppy disk, etc..

CPU 305 controls each part that constitutes employee terminal 111 and executes various operation processing.
Necessary programs for CPU 306 to execute above processings such as OS306A, groupware system 306B, seal mark processing program 306C, and seal mark information memory 306D are stored in the memory 306.

OS306A is a program to realize a function such as a file management, process management or device management to control an employee terminal 111 as a whole.
Groupware system etc. 306B is such a system that employee terminal 111 exchange data with both inside the company and outside the company, and display necessary data, and the groupware system 306B has an interface with the seal mark processing program 306C to deal with the certification information that is sealed on data.
And, as for the system of this 306B, if it is the application system that handles data, even what thing is fine, and it is not limited to a groupware system especially.
And seal mark processing program 306C can be run directly on OS as an individual application system.

Seal mark processing program 306C is a program to execute a processing of seal mark sealing, a processing of seal mark reproduction, a processing of seal mark invalidity and a processing of document certification on employee terminal 111.
Seal mark sealing processing is a processing so that an employee 110 seal an electronic seal on data with employee terminal 111.
The seal mark sealing processing comprises a processing of inputting seal mark corresponding to the employee ID,
a processing of embedding encrypted information with each secret key in a specific block of seal mark, wherein the embedded information areselected document characteristic quantity information and sealing information such as seal serial No, and
a processing of sealing a seal mark on a position that the document set. Seal mark reproduction processing is the processing that an employee 110 creates data reproduction from original data on which an electronic seal is sealed with employee terminal 111, and the seal mark reproduction processing is the processing to display necessary data, and to decrypt embedded data by attached public key with the seal mark.

And Seal mark reproduction processing comprises confirming whether document is not falsified or not, reproducing data and seal mark in condition of confirming data validity and reproduction acceptability, adding reproduced seal mark to information indicating reproduction, encrypting the seal mark with a secret key, and embedding the encrypted data in a specific block of the seal mark, attaching a public key, and sealing the seal mark in the position that the document set.

Seal mark invalidity processing is the processing that an employee 110 executes a processing of invalidating data on which an electronic seal is sealed with the employee terminal 111, and the seal mark invalidity processing comprises a processing of displaying necessary data, and decrypting embedded data using a public key attached with the seal mark.

And confirming certified document information and data original to decrypted data, adding information indicating invalidity of seal mark, encrypting with its own secret key, embedding encrypted data in a specific block of seal mark, attaching a public key, and sealing in a position that the document set.

Document certification processing is the program so that employee 110 confirm the contents of a seal mark.
The processing comprises displaying necessary data, decoding information embedded with the public key attached to a seal mark,
sending request to confirm toward seal mark management equipment 101 based on embedded data in the seal mark, and displaying an original and validity.

Seal mark information memory 306D is the memory in which a seal mark and a public key, that are outputted using seal mark processing program 306C on employee terminal 111, are temporarily stored

And the public key can be sent to employee terminal 111 with FD orthrough the network in advance and the method of sending a public key and the storage method are not limited

Fig. 4 is the data example of seal mark management DB209.
Employee ID 401, seal ID 402, name 403, mail address 404, information 405 indicating a belonging and a position, and seal image 406, etc. are stored on the basis of a constant description standard.
When registering a new seal mark and changing the information indicating a belonging and position of an existing seal mark, seal mark management DB209 is renewed.

Fig. 5 is the data example of seal mark sealing management DB210.
Seal ID 501, original Serial No. 502, creation time and date503, reproduction acceptability flag 504 , reproduction flag 505, invalidity flag 506, feature quantity information 509 are stored on the basis of a constant description standard.
When there is a sealing / reproduction / invalidity requirement of a seal mark in the mark sealing management DB210, seal mark sealing management DB210, etc. is stored on the basis of a constant description standard.
As for reproduction acceptability flag 504, it is possible to control a reproduction possibility frequency as a reproduction possibility counter.
Invalidity flag 506 can control time until becoming invalid as a valid term.

The data of the seal mark sealing management DB210 is encoded with the secret key that each seal mark certification program 306C manages on employee terminal 111 by seal mark processing program 306C of employee terminal 111, and the encoded data is embedded as an entity of a seal mark. The so-called checksum that adds considering the code of character data to be numerical value, or the compression sentence of data contents, etc. are used as characteristic information of data.
Document certification information is embedded in the circumference part of a seal image other than a block in which the reproduction information of a seal image was embedded as shown in 703 of Fig. 7 for example.

Fig. 6 is the data example of seal mark reproduction management DB211. When there is a reproduction requirement of a seal mark from employee terminal 111, seal mark reproduction management program 208B in the seal mark management equipment 101 stores high-ranking seal mark 601, serial ID 601, serial No. 802, reproduction date 603, reproduction employee ID 504, etc. on the basis of a constant description standard.
The information stored is embedded as an entity of a seal mark by a method that is similar to Fig. 5.

And, the data that is necessary for document certification is not limited to the example of Fig. 5 and 6, and meet information that is necessary as record information of the electronic data that can be used when acquiring certification of ISO 9001.

Fig. 7 is the image example of a seal image and a seal mark.
For example, seal mark reproduction information is embedded in a seal image like 701.
At this time, the inside of a seal image is divided into 2 or more blocks in advance, and the information that mean the validity and the original of a seal mark and the document certification information are respectively embedded in the specific block.
For example, dividing some blocks like embedding information means validity or original of a seal mark in name part and company name part of visible digital watermark like 702, and embedding document certification information in the circumference part of a seal image like 703 so that embedded information from corresponding block be automatically extracted when decoding embedded information in a seal mark using seal mark certification program 306C, etc. of the employee terminal.
Although design of individual seal is used as seal design example in 701, position seal with date, design like signature etc., design indicating reproduction, or company name when seal is used for company seal are acceptable, therefore seal design is not limited to seal design example 701. However, it is important to be the mark- design that gives it a reliance feeling so that mark design can give us the feeling that information is embedded in a seal mark because mark design is different from mere image design

Then an operation of the electronic seal mark certification system of the present embodiment is explained.

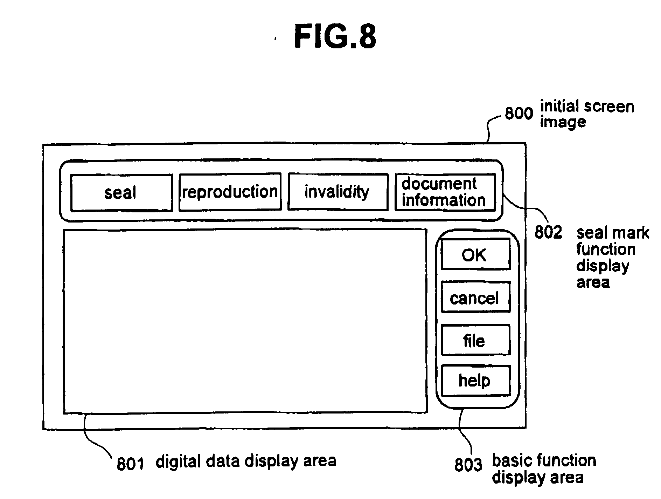

Fig. 8 is an example of initial screen image of the electronic seal mark reproduction management system that is displayed with seal mark processing program 306C.
Initial screen image 800 comprises data display areas 801 that display necessary digital documents, seal mark function display area 802 where the function buttons of a seal mark are arranged, and basic function display area 803 where the buttons of a basic function like OK, a cancellation and a file are arranged.
However, initial screen image 800 is the example of arranging each area and the screen image is not limited to this arrangement.

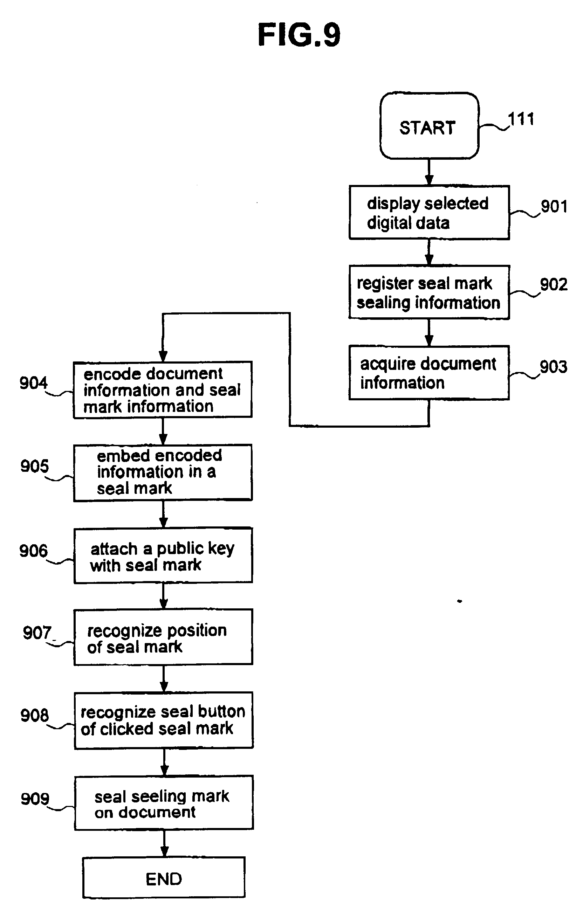

Fig. 9 is the diagram to explain the processing flow when sealing seal mark embedded document reproduction management information on data to be sealed with the employee terminal 111.

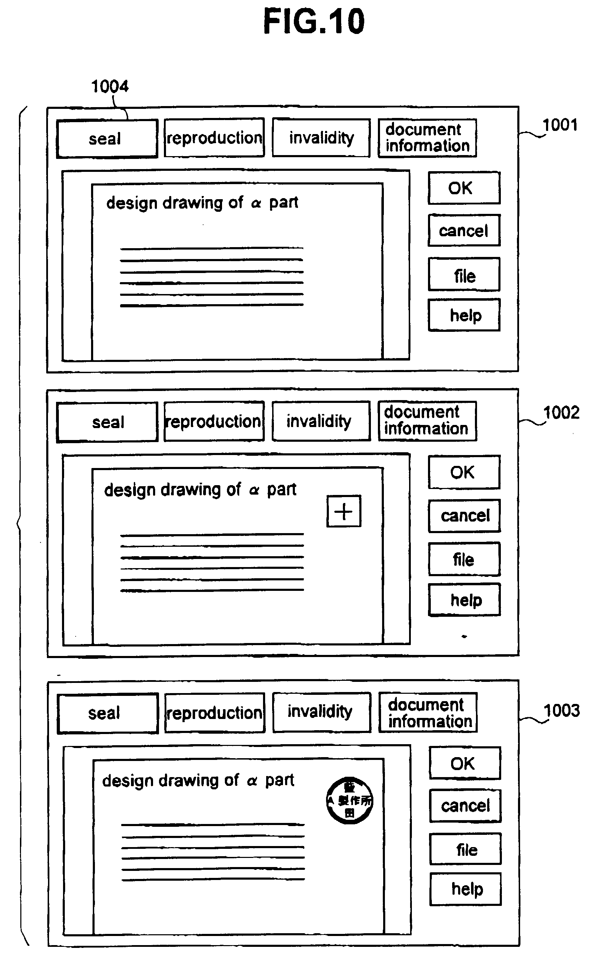

And Fig. 10 is the processing screen image that corresponds to the processing flow of Fig. 9.
By using this Fig. 10 and above Fig. 9, the above processing flow is explained. At first an employee 110 selects data which the employee wants to seal with file button of basic function display area 803, displaying (901) in data display area 801, registering (902) seal ID 501, seal serial No, 502, creation date 503, reproduction acceptability flag 504, reproduction flag 505, invalidity flag 506, file name 507, terminal ID 508, and data characteristic information 509 in the seal mark sealing management DB 210.
And while the initial value of reproduction acceptability flag 504, reproduction flag 505 and invalidity flag 506 is made OK (a reproduction is possible), OFF (original) and OFF (validness) by this explanation respectively, it can be changed by employee 110 and system manager 100.

Then, document feature quantity information is acquired from the data, and the contents of seal mark sealing management DB are encoded with a secret key that is respectively peculiar to each seal mark certification program 306C decided in advance to every employee and are embedded in a seal mark (903, 904 and 905).

And, when sealing button 1004 of seal mark function display area 802 is pressed after attaching a public key that is necessary for the decoding and selecting a sealing position, a position that documents set is sealed with seal mark sealing program 306C. (906,907,908 and 909)
And even method that is acquired in the network and FD, etc. is fine without attaching the public key that is peculiar to an employee terminal that is necessary to decode information embedded in a seal mark to a seal mark.

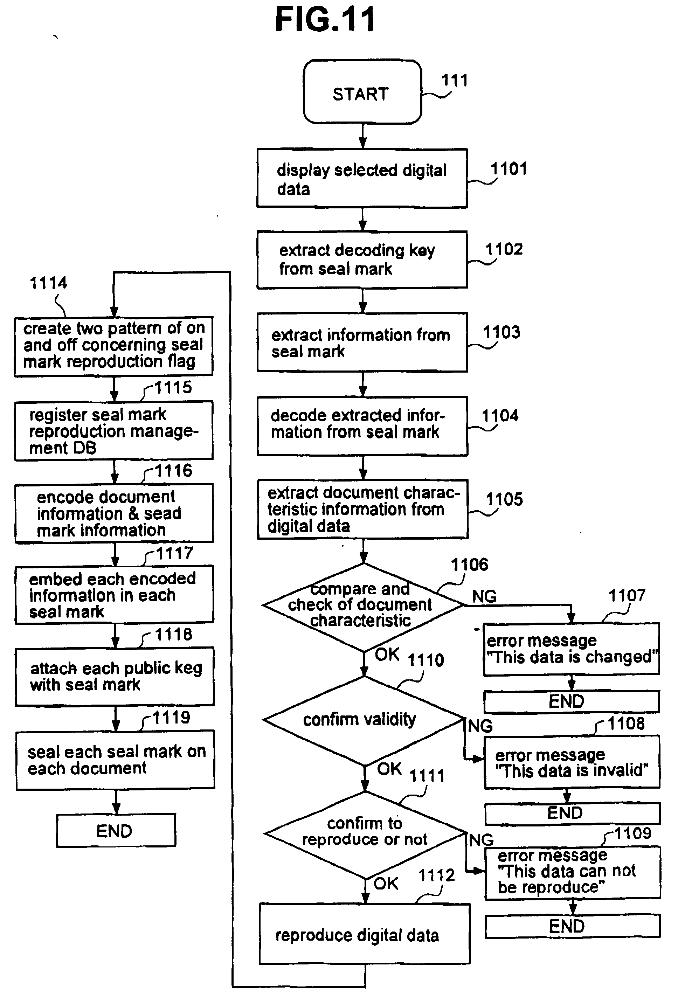

Fig. 11 is a figure to explain data reproduction processing flow with a mark seal on employee terminal 111.

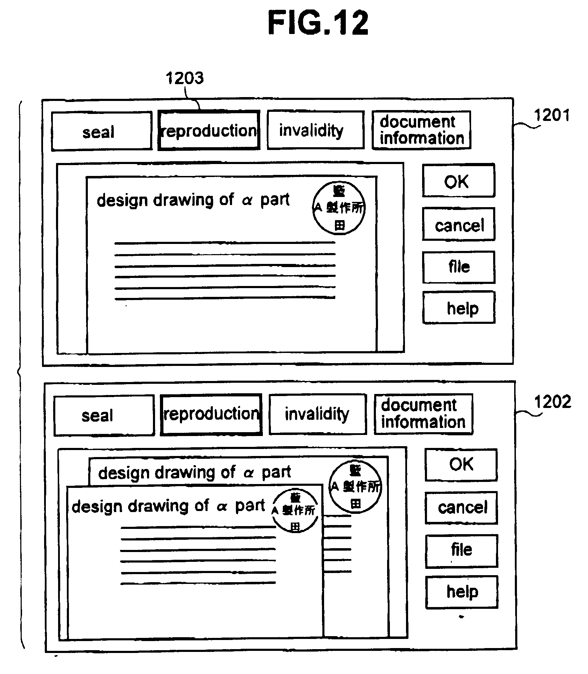

And Fig. 12 is a processing screen image figure at the time of pressing the reproduction button 1203 that corresponds to the processing flow of Fig. 11. By using this Fig. 11 and 12, the above processing flow is explained.

First employee 110 selects data with a seal mark that the employee wants to reproduce with the file button that is in basic function display area 803 and indicates (1101) it in digital display area 801.
Document information to confirm seal mark information to confirm information about seal mark sealing after extracting (1102) a public key attached to a seal mark from the seal mark and decoding a seal mark, and a falsification of documents is extracted. (1103 and 1104)

Then extract the feature quantity information of the data, and compare and check document information unloaded in 1104 (1106).

In case it is judged that data is falsified as the result of the comparison and check, the error message like " this data is changed" is displayed (1107).

When it is confirmed that data is not falsified, the validity of data is confirmed from invalidity flag 506 of seal mark reproduction management DB. If a reproduction flag of the seal mark serial NO 502 is OFF as a means of confirmation, it judges an original, and an invalidity flag of serial NO is confirmed at once.
And then, if the invalidity flag is OFF, it judges valid, and it judges an invalid in case of ON.
And if the reproduction flag of the seal mark serial No.502 is On, it judges valid, and confirm the invalidity flag 506 of data when high-ranking seal mark serial NO of the serial No 602 equals to serial NO 502 of the seal mark sealing management DB 210.
If it is judged that data is invalid, the message like "this data is invalid ",etc. is displayed (1110, 1108) .
If it is confirmed that the data is valid, the acceptability of a reproduction is judged from reproduction acceptability flag 504, and if it is judged that it is impossible to reproduce it, the error message that this message cannot be reproduced is displayed (1111,1109)
If the contents of above mentioned error message can be changed as far as the similar meaning expresses, and any expressing means is fine if it appeals to five senses of human beings.

If confirming that data is not falsified, and confirming validity and reproduction acceptability, it judges that the data is reproduction possible, reproduce the data and seal mark information, set reproduction flag 505 of reproduced seal mark for ON (already reproduces), and register seal ID 501, serial NO 502, creation date 503, reproduction acceptability flag 504, reproduction flag 505, invalidity flag 506, file name 507, terminal ID 508, and data characteristic quantity information in seal mark sealing management DB 210 (1114)..

And at the same time the information that concerns a reproduction mark is registered to mark reproduction management DB211. (1115)
The information that registers comprises a high-ranking seal mark serial NO 601, a serial NO 602, reproduction date 603, and reproduction employee ID 604. High-ranking seal mark serial NO acquires original serial NO 502 of seal mark, high-ranking seal mark serial NO is hierarchically managed with newly taken serial NO.

Then, document information and seal mark information are encoded for each for an onginal and for a reproduction and are embedded in a seal mark (1116 and 1117).

Then attaches a public key for decoding to each seal mark for an original and for a reproduction, and seals documents. (1119)
By the above processing, data with seal mark has been reproduced by creating two types of data with seal mark for an original and for a reproduction. (1202)

And as for the position which seal mark is sealed on data, either the same place as position sealed in step 1101 or a position that employee 110 specified a seal mark as data again newly is fine.
And while only one data is reproduced by this explanation, several data can be reproduced once.

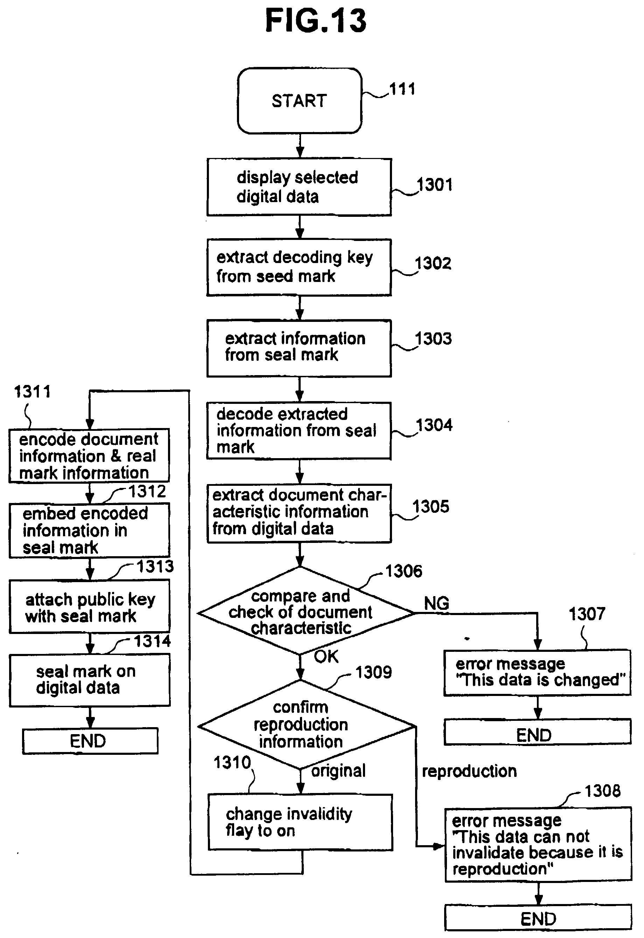

Fig. 13 is a figure to explain invalidity processing flow on employee terminal 111.

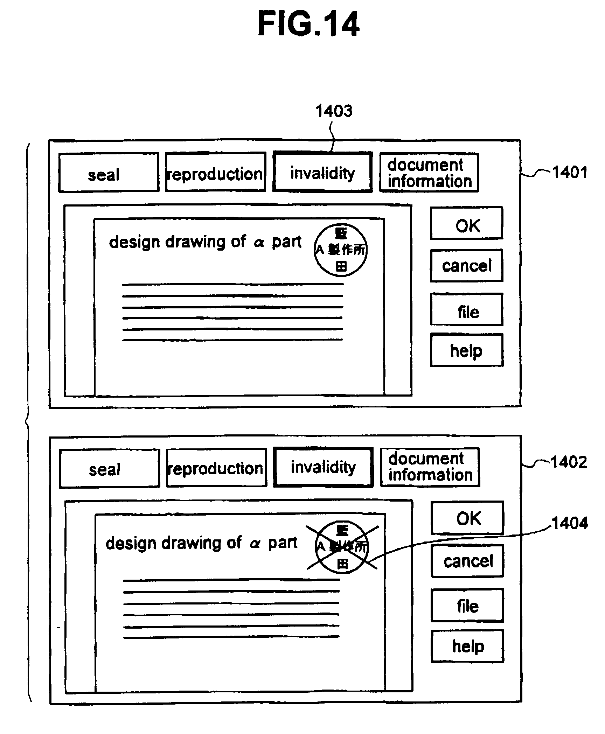

And Fig. 14 is an example of processing screen image at the time of pressing of invalidity button 1403 that corresponds to the processing flow of Fig. 13.

When invalidity button 1403 is pressed first on an employee terminal, the screen image of 1401 in Fig. 14 appears.
And the processing from the data display selected to the comparison of document information is omitted because it is the same as above description. (1301, 1302 , 1303 , 13041305, 1306 and 1307)

Then reproduction information is confirmed to confirm an original of the data.
As for confirmation of reproduction information, reproduction flag 505 is confirmed, and the error message like " this data can not be processed for invalidity because this data is reproduced." is displayed if the seal mark is a reproduction. (1309,1308)
If this seal mark is an original, invalidity flag of the seal mark sealing management DB with respect to the seal mark is set at ON, that is invalid, (1310), document information and seal mark information is encoded, they are embedded, and they are sealed on data attaching with a public key.

While the process changing valid data to invalid data is explained by above description, a process changing invalid data to valid data can be fine. And as the means that invalidity flag 506 is set at ON, that is, invalidity, seal mark has a valid deadline, and an invalidity flag can be ON (invalidity) by a timer.
Invalidity visually is fine changing GUI as for the seal mark that seals data that became an invalidity (1404).

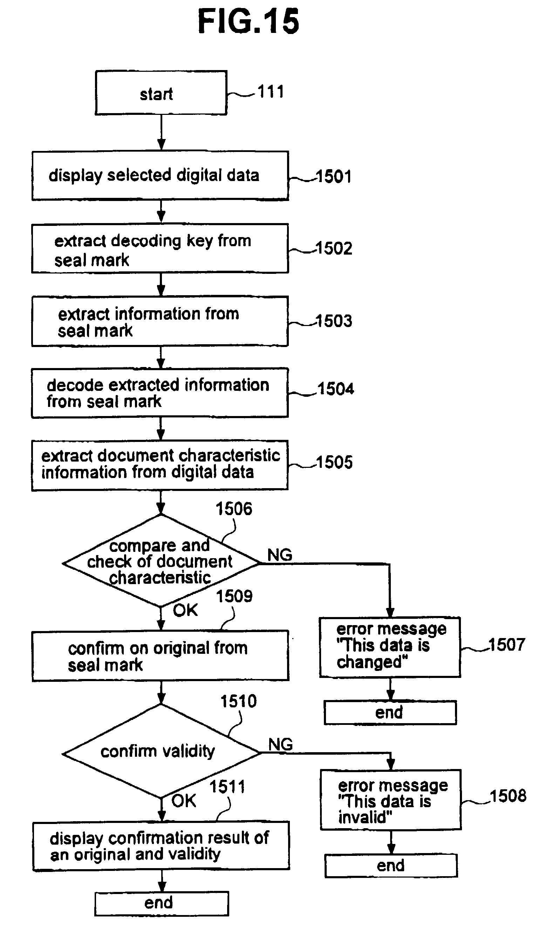

Fig. 15 is a figure to explain document information confirmation processing flow on employee terminal 111.

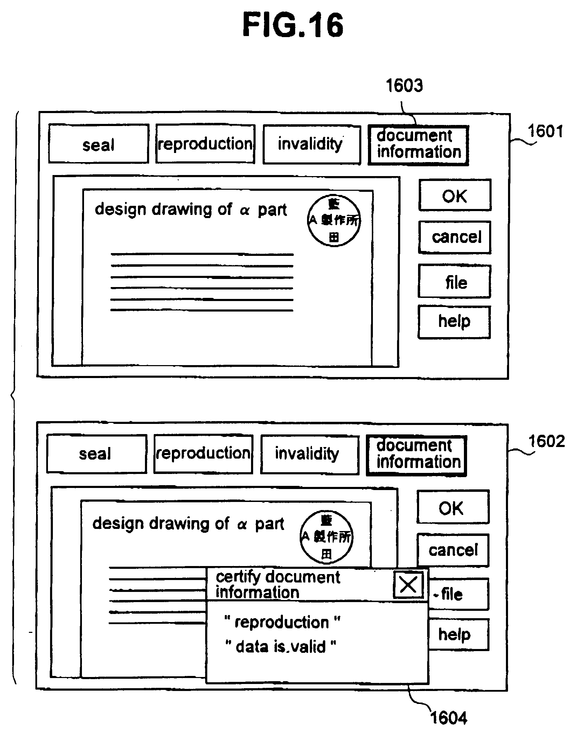

And Fig. 16 is the example of the processing screen image that corresponds to the processing flow of Fig. 15.

At first when document information button 1603 is pressed on employee terminal 111, data selected is indicated.
The processing from the data display to the comparison / check of document characteristic quantity information is omitted because it is the same as above description (1501, 1502, 1503, 1504, 1505, 1506, 1507).

If it is confirmed that the data is not falsified, the contents of reproduction flag 505 is confirmed to confirm that the data is the original or the reproduction from the seal mark (1509)
Then the validity of the data is confirmed.
If a reproduction flag of the seal mark serial NO502 is OFF as a means of confirming the validity of the data, data is judged as an original and an invalidity flag of the serial No at once is confirmed.
And then if the invalidity flag is OFF, the data is judged as valid, and the data is judged as an invalid in case of ON.
And if a reproduction flag of the seal mark serial NO502 is ON, the data is judged as reproduction, invalidity flag at the time of "high-ranking seal mark serial NO of serial NO 602 = serial NO 502 of the seal mark sealing management DB 210 " is confirmed.

When the validity of the data can be confirmed, confirmation result 1604 is displayed. (1510, 1511 and 1602)

By attaching a mark that has seal image design according to a present invention as it was explained in the above description to data and embedding document information and seal mark information in this mark itself, the mechanism confirming the probability of the information to some degree at glance can be provided.
And the mechanism that can use the electronic seal of design that is similar to an employment mark, a recognition seal, a sign, a corporate seal, etc. that are used in the various scenes of actual world on a network is provided because in the present invention seal image design can be created.

A document management method of being able to confirm the probability of the information to some degree with glance can be provided by attaching the mark that has seal image design to data according to a present invention and embedding document information and seal mark information in this mark itself.

## Claims

1. A document management apparatus comprising :
at least one terminal,
at least one management equipment that manages a mark which represents seal or signature used in said terminal, said terminal and said management
equipment are mutually coupled through a communication network,
said mark management equipment includes means for registering and managing such necessary information as to confirm original data and reproduction from original in case a change requirement is received,
said terminal includes means for embedding necessary information in said mark to confirm original of data and validity of data, means for being able to seal data on said mark, means for controlling validity of data, means for being able to confirm either original of data or reproduction of data or both original of data and reproduction of data.

2. A document management apparatus according to claim 1,
said mark management equipment includes means for hierarchically managing the original mark sealed on a data original and reproduction marks sealed on a reproduction of data.

3. A document management apparatus according to claim 1, said document management apparatus generates a visible seal mark which includes means for dividing image data into more than 2 blocks, adding necessary information to confirm original of data and validity of data and confirm that said document is not falsified to said block in which image data is different from, and confirming either original of data or validity of data or both original of data and validity of data.

4. A document management apparatus according to claim 1, said document management apparatus generates a visible seal mark which includes means for confirming original of data and validity of data using a visible watermark and invisible watermark.

5. A document management apparatus according to claim 1, embedding encrypted necessary information to manage original of data, validity of data, and information that concerns sealing and reproduction in said mark in said mark management equipment, and attaching a necessary public key to a seal mark to decrypt said encrypted necessary information,
whereby confirming original and validity on a network in spite of intranet, and judging whether reproduction is possible or not.

6. A electronic seal reproduction management system according to claim 1, comprising :
reproduction of data with a mark is capable,
information is succeeded from original mark to reproduction mark in said terminal.

7. A document management apparatus according to claim 1,
An interface is provided in said terminal, the interface includes function of embedding necessary information to confirm original of data and validity of data in said mark, and function of confirming either original of data or validity of data or both original of data and validity of data.
